# DEMANDE DE BREVET EUROPEEN

(11) **EP 3 100 970 A2**
(43) Date de publication de la demande: **07.12.2016**
(21) Numéro de dépôt: 16170836.7
(22) Date de dépôt: 23.05.2016
(51) Int. Cl.: B65H 57/14, H02G 11/02

(54) **ENROULEUR POUR CABLE ELECTRIQUE**

(30) Priorité: 21.05.2015 FR 1554594
(71) Demandeur: Nassif, Dhiya, 94400 Vitry-sur-Seine (FR)
(72) Inventeur: NASSIF, Dhiya, 94400 Vitry-sur-Seine (FR)
(74) Mandataire: Labaune, Anne-Lise

(57) **Abrégé**

L'invention concerne un enrouleur (1) pour câble électrique (2), comprenant :
- un tambour (5), destiné à recevoir un enroulement d'un câble électrique,
- une première flasque (6) et une deuxième flasque (7), disposées de part et d'autre du tambour,
chacune desdites première et deuxième flasques comportant au moins une ouverture (8) apte à recevoir et à maintenir ledit câble électrique.

## Description

La présente invention concerne un enrouleur pour câble électrique.

Un câble électrique est notamment utilisé pour permettre la connexion électrique d'un appareil ou outil portatif, par exemple une perceuse.

Un tel câble électrique comporte une première extrémité, destinée à être connectée au réseau électrique, et une deuxième extrémité, destinée à être connectée à l'appareil ou outil à alimenter.

Le câble électrique peut être un câble de l'appareil ou outil. Dans ce cas, la deuxième extrémité est connectée de manière fixe à un élément électrique de l'appareil ou outil.

En variante, le câble électrique peut être une rallonge. Dans ce cas, la deuxième extrémité est destinée à être connectée de manière amovible à l'appareil ou outil.

La longueur du câble est un paramètre important.

En effet, un câble trop court peut empêcher un utilisateur d'accéder à l'endroit où il souhaite utiliser l'appareil ou outil.

Inversement, un câble trop long peut s'emmêler et/ou se coincer dans des obstacles séparant la prise électrique de l'endroit où l'utilisateur souhaite utiliser l'appareil ou outil.

Pour résoudre ce problème technique, il existe des enrouleurs comportant des mécanismes automatiques d'enroulage, qui permettent d'enrouler automatiquement une partie du câble qui n'est pas utile pour une utilisation donnée de l'appareil ou outil.

Cependant, ces enrouleurs sont généralement onéreux, et peuvent tomber en panne.

De plus, lorsque l'appareil ou outil n'est pas utilisé, le rangement du câble électrique peut être problématique.

Dans le cas d'un câble d'un appareil ou outil, il est usuel de ranger le câble en l'enroulant autour de l'appareil ou outil. Le câble peut alors s'emmêler, seul et/ou avec des câbles d'autres appareils ou outils. Cela complique l'utilisation ultérieure de l'appareil ou outil.

Il existe donc un besoin d'enrouleurs pour câble électrique qui ne présentent pas les inconvénients précités.

La présente invention vient améliorer la situation.

A cet effet, l'invention propose un enrouleur pour câble électrique, comprenant :
- un tambour, destiné à recevoir un enroulement d'un câble électrique,
- une première flasque et une deuxième flasque, disposées de part et d'autre du tambour,
chacune desdites première et deuxième flasques comportant au moins une ouverture apte à recevoir et à maintenir ledit câble électrique.

Selon un mode de réalisation de l'invention, chacune desdites première et deuxième flasques comporte plusieurs ouvertures aptes à recevoir et à maintenir ledit câble électrique.

L'enrouleur est par exemple réalisé en matière plastique.

Chaque ouverture peut comporter des lèvres en caoutchouc.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue simplifiée en perspective d'un enrouleur selon un premier mode de réalisation de l'invention ;
- la Figure 2 est une vue selon une autre perspective de l'enrouleur de la Figure 1 ; et
- la Figure 3 est une vue simplifiée en perspective d'un enrouleur selon un deuxième mode de réalisation de l'invention.

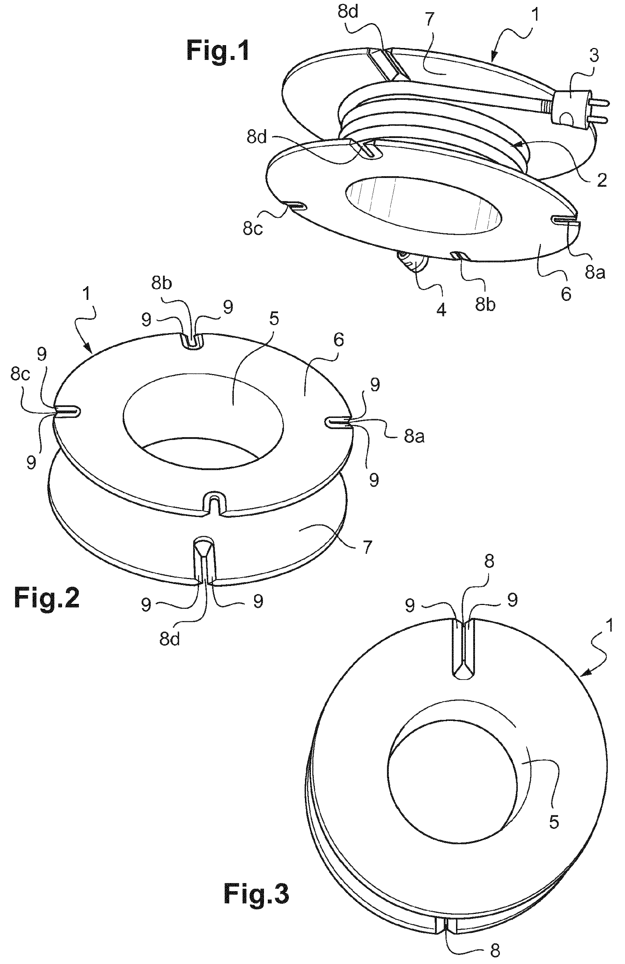

La figure 1 représente un enrouleur 1 pour câble électrique 2.

Le câble électrique 2 est par exemple destiné à permettre la connexion électrique d'un appareil ou outil portatif (non représenté), par exemple une perceuse.

Le câble électrique comporte une première extrémité 3, destinée à être connectée au réseau électrique, et une deuxième extrémité 4, destinée à être connectée à l'outil à alimenter.

Le câble électrique 2 peut être un câble de l'appareil ou outil. Dans ce cas, la deuxième extrémité 4 est connectée de manière fixe à un élément électrique de l'appareil ou outil.

En variante, le câble électrique 2 peut être une rallonge. Dans ce cas, la deuxième extrémité 4 est destinée à être connectée de manière amovible à l'appareil ou outil.

L'enrouleur 1 est par exemple réalisé en matière plastique.

L'enrouleur 1 comprend un tambour 5, destiné à recevoir un enroulement du câble électrique 2.

On appelle 'enroulement' une portion du câble 2 qui est enroulée sur le tambour 5. La portion du câble 2 formant l'enroulement est la portion du câble 2 qui n'est pas utile pour une utilisation donnée de l'appareil ou outil.

L'enrouleur 1 comporte une première flasque 6 et une deuxième flasque 7, qui sont disposées de part et d'autre du tambour 5.

Chacune des première et deuxième flasques 6, 7 comporte une ou plusieurs ouverture(s) 8.

Chaque ouverture 8 présente la forme d'une rainure, et permet le maintien du câble 2 dans l'ouverture 8 correspondante.

Sur les Figures 1 et 2, chaque flasque 6, 7 comporte quatre ouvertures 8a, 8b, 8c, 8d.

En variante, comme représenté sur la figure 3, chaque flasque 6, 7 peut comporter une unique ouverture 8.

Le nombre d'ouvertures n'est pas limitatif.

Les ouvertures 8 peuvent comporter des lèvres 9, qui sont par exemple formées en caoutchouc. Les lèvres 9 sont optionnelles. Elles permettent d'améliorer le maintien du câble 2 dans l'ouverture 8 correspondante.

On décrit ci-dessous le fonctionnement de l'enrouleur 1.

Un utilisateur, qui souhaite alimenter électriquement un appareil ou outil, connecte l'extrémité 3 du câble 2 à la prise.

Puis, l'utilisateur détermine la longueur de câble dont il a besoin pour utiliser son appareil ou outil.

Puis, l'utilisateur enroule la portion du câble dont il n'a pas besoin autour du tambour 5.

Puis, l'utilisateur introduit l'extrémité amont de la portion du câble (ou enroulement) 2 dans une ouverture 8 d'une flasque 6, 7, et l'extrémité aval de la portion du câble (ou enroulement) 2 dans une ouverture 8 de l'autre flasque 6, 7.

Puis, l'utilisateur connecte l'extrémité 4 du câble 2 à l'appareil ou outil.

L'utilisateur peut alors utiliser son appareil ou outil avec une longueur de câble 2 adaptée.

L'enrouleur 1 permet également de faciliter le rangement de câble 2.

Bien entendu, la présente invention ne se limite pas aux formes de réalisation décrites ci-avant à titre d'exemples ; elle s'étend à d'autres variantes.

## Revendications

1. Enrouleur (1) pour câble électrique (2), **caractérisé en ce qu'**il comprend :
- un tambour (5), destiné à recevoir un enroulement d'un câble électrique,
- une première flasque (6) et une deuxième flasque (7), disposées de part et d'autre du tambour,
chacune desdites première et deuxième flasques comportant au moins une ouverture (8) apte à recevoir et à maintenir ledit câble électrique.

2. Enrouleur selon la revendication 1, dans lequel chacune desdites première et deuxième flasques (6, 7) comporte plusieurs ouvertures (8) aptes à recevoir et à maintenir ledit câble électrique (2).

3. Enrouleur selon la revendication 1 ou 2, dans lequel l'enrouleur est réalisé en matière plastique.

4. Enrouleur selon l'une quelconque des revendications 1 à 3, dans lequel chaque ouverture (8) comporte des lèvres (9) en caoutchouc.
